# EUROPÄISCHE PATENTSCHRIFT

(11) **EP 0 897 462 B1**
(45) Veröffentlichungstag und Bekanntmachung des Hinweises auf die Patenterteilung: **05.07.2000**
(21) Anmeldenummer: 97922943.2
(22) Anmeldetag: 02.05.1997
(51) Int. Cl.: F02B 3/06, F02B 47/00, F02B 51/00

(54) **VERFAHREN ZUR VERRINGERUNG DES RUSSGEHALTS IM ABGAS EINES DIESELMOTORS UND EINRICHTUNG ZUR DURCHFÜHRUNG DIESES VERFAHRENS**
PROCESS FOR REDUCING THE SOOT CONTENT OF DIESEL ENGINE EXHAUST GASES AND DEVICE FOR IMPLEMENTING IT
PROCEDE PERMETTANT DE REDUIRE LA TENEUR EN SUIES DANS LES GAZ D'ECHAPPEMENT D'UN MOTEUR ET DISPOSITIF APPROPRIE POUR METTRE LEDIT PROCEDE EN OEUVRE

(30) Priorität: 04.05.1996 DE 19617885
(43) Veröffentlichungstag der Anmeldung: 24.02.1999
(73) Patentinhaber: Degussa-Hüls Aktiengesellschaft, 60287 Frankfurt am Main (DE)
(72) Erfinder: PETERS, Norbert, D-52056 Aachen (DE); BORN, Caroline, D-52056 Aachen (DE); ANTONI, Christian, D-52056 Aachen (DE); PLESSING, Tobias, D-52056 Aachen (DE)
(86) Internationale Anmeldenummer: EP9702253
(87) Internationale Veröffentlichungsnummer: WO9742405

(56) Entgegenhaltungen:
- WO-A-94/13941
- DE-A- 1 601 339
- DE-C- 4 422 552
- FR-A- 2 406 723

## Beschreibung

Die Erfindung betrifft ein Verfahren zur Verringerung des Rußgehalts im Abgas eines Dieselmotors.

Die Emission von Ruß und NOₓ stellen nach wie vor eines der größten Probleme des Dieselmotors dar. Alle bisherigen Strategien zur Schadstoffminderung zeigen eine Schere zwischen der Ruß- und NOₓ-Abgaskonzentration auf. Durch zeitliche Verschiebung des Einspritzbeginns in Richtung späterer Einspritzung kann zwar die Rußbildung vermindert werden, jedoch führt dies zu höheren NOₓ-Emissionen. Das Verfahren der Abgasrückführung hingegen ermöglicht durch die niedrigeren Temperaturen im Motor eine Verringerung der NOₓ-Produktion, bringt aber eine stark erhöhte Rußemission mit sich.

Durch zusätzliches Einspritzen von Wasser in den Brennraum ist es möglich, die NOₓ-Bildung durch Herabsetzung der Verbrennungstemperatur zu verringern - siehe Amin Velji et al., MTZ Motorentechnische Zeitschrift 57 (1996) 7/8, 400-407. Eine gleichzeitige Minderung der Rußemission wird nur erzielt, wenn Wasser in Form einer Diesel-Wasser-Emulsion in den Brennraum eingebracht wird, nicht aber, wenn Wasser mit der Verbrennungsluft oder direkt durch geschichtete Einspritzung in den Brennraum eingebracht wird.

Aus der EP-B 0 333 704 ist bekannt, den Anteil schädlicher Substanzen im Abgas, nämlich CO, HC und NOₓ, eines Verbrennungsprozesses, bei dem Kohlenwasserstoffverbindungen beteiligt sind, durch Zuführung einer flüssigen Zusammensetzung, die ein Peroxid, wie Wasserstoffperoxid oder eine andere Peroxoverbindung und Wasser enthält, in den Verbrennungsprozeß, und zwar mit der Verbrennungsluft und/oder dem Brennstoff-Luft-Gemisch, zu vermindern. Die Zufuhr in den Verbrennungsprozess erfolgt bei jenem bekannten Verfahren bereits zur Einleitung oder innerhalb der Zündphase des Verbrennungsprozesses. Eine Rußreduzierung in dem Abgas läßt sich bei der in diesem Dokument angegebenen Verfahrensführung nicht erzielen. Die flüssige Zusammensetzung kann 10 bis 80 Vol-% Wasserstoffperoxid enthalten, das im Brennraum in OH-Radikale zerfällt, die ihrerseits die Verbrennung begünstigen.

Der nächste Stand der Technik ist in der US-A- 4290 392 offenbart, die offensichtlich den Gegenstand nach Anspruch 1, 1. Teil zeigt.

Nach der US-A- 4 290 392 wird in eine Dieselmaschine nach der anfänglichen Verbrennung, also nach Einspritzung des Kraftstoffs in den Brennraum und der Kompressionszündung eine wäßrige Lösung von 10-30% H2O2 eingespritzt.

Aufgabe der Erfindung ist es, die Rußemission bei der dieselmotorischen Verbrennung unter Einsatz von Peroxoverbindungen zu reduzieren, wobei gleichzeitig die NOₓ-Emission nicht negativ beeinflußt und vorzugsweise gleichzeitig erniedrigt werden soll.

Das angestrebte Ziel einer Verringerung des Rußgehalts im Abgas eines Dieselmotors, in dessen Brennraum Dieselkraftstoff getaktet eingespritzt und verbrannt wird, wird erfindungsgemäß erzielt, mit den Merkmalen gemäß Anspruch 1.

Wasserstoffperoxid oder die Peroxoverbindung wird zweckmäßigerweise in der Form einer Wasser enthaltenden Flüssigkeit, üblicherweise in Form einer Lösung, zugeführt. Bei den anderen Peroxoverbindungen handelt es sich außer H₂O₂ um organische Peroxoverbindungen, wie Peroxocarbonsäuren und Hydroperoxide. Peroxosalze sind wegen der damit auftretenden Verkrustung im allgemeinen weniger geeignet. Besonders bevorzugt wird eine wäßrige H₂O₂-Lösung mit einem Gehalt von insbesondere 30 bis 50 Gew.-%.

Die Erfindung beruht auf dem Gedanken, bei der Verbrennung von Dieselkraftstoff entstehende Rußpartikel gegen Ende und insbesondere im Anschluß an die Verbrennungsphase mit Hilfe von zu diesem Zeitpunkt dem Verbrennungsprozeß zugeführtem Wasserstoffperoxid oder einer anderen Peroxoverbindung zumindest weitgehendst durch Verbrennung zu eliminieren.

Beim dieselmotorischen Verbrennungsprozeß wird in der sich an die Selbstzündung anschließenden Verbrennungsphase Ruß gebildet, der jedoch zum größen Teil durch die während dieser Phase noch vorhandenen OH-Radikale wieder oxidiert wird. Die Verbrennungsphase ist abgeschlossen, wenn aufgrund der absinkenden Temperatur während der Expansion ein Kettenabbruch der chemischen Reaktionen erfolgt. Dabei rekombinieren die chemisch aktiven Radikale O, H und OH zu H₂O und O₂. Da das OH-Radikal hauptsächlich für die Rußoxidation verantwortlich ist, kommt zu diesem Zeitpunkt auch die Rußoxidation zum Erliegen. Um den im Brennraum noch vorhandenen Ruß oxidieren zu können, wird erfindungsgemäß sichergestellt, daß etwa zu diesem Zeitpunkt eine zusätzlich bereitgestellte Quelle für OH-Radikale in wirksamer Menge anwesend ist.

Das H₂O₂-Molekül dient bei dem erfindungsgemäßen Verfahren in erster Linie als Lieferant des für den Oxidationsprozeß von Ruß notwendigen OH-Radikals. Bei den im Anschluß an die Verbrennungsphase vorhandenen Gastemperaturen zwischen 1.200 K und 2.000 K dissoziert es sehr schnell zu zwei OH-Radikalen. Bei einer ausreichenden Dosierung durch eine geeignete Einspritztechnologie in Verbindung mit einer hinreichend guten Zerstäubungsgüte läßt sich damit eine weitgehende Rußoxidation erreichen. In Kombination mit einer Abgasrückführung werden sowohl Ruß- als auch NOₓ-Emissionen reduziert.

Gemäß einer bevorzugten Durchführung des erfindungsgemäßen Verfahrens wird im Anschluß an die Verbrennungsphase zur Vervollständigung der Verbrennung und damit Reduzierung von Rußpartikeln im Abgas jeweils eine gering dosierte Menge einer wäßrigen Wasserstoffperoxidlösung eingespritzt und dabei möglichst weitgehendst zerstäubt. Unter dem Begriff "im Anschluß an die Verbrennungsphase" wird der Zeitpunkt verstanden, wo ein wesentlicher Teil des Kraftstoffs verbrannt ist. Zweckmäßigerweise erfolgt die Einspritzung der eine Peroxoverbindung enthaltenden Flüssigkeit im Bereich von 5 bis 40° Kurbelwinkel nach Beginn der Einspritzung des Dieselkraftstoffs in den Brennraum.

Während die Dieselkraftstoff-Einspritzung üblicherweise um 10° ± 5° vor dem oberen Totpunkt (OT) eines Dieselmotor-Verdichtungshubes erfolgt, wird die erfindungsgemäß zu verwendende H₂O₂- oder eine andere Peroxoverbindung enthaltende Flüssigkeit nach dem oberen Totpunkt eingespritzt. Vorzugsweise erfolgt in diesem Fall die Einspritzung der Peroxoverbindung enthaltenden Flüssigkeit im Bereich von 5° bis 30° Kurbelwinkel, insbesondere 5° bis 20°, nach dem oberen Totpunkt. Der Zeitdauer, innerhalb deren die Flüssigkeitseinspritzung erfolgen soll, liegt etwa im Bereich derjenigen der Dieselkraftstoff-Einspritzung und damit vorzugsweise im Bereich von 0,5 bis 2 ms.

Die Einspritzung des Dieselkraftstoffes sowie der H₂O₂ oder eine andere Peroxoverbindung enthaltenden Flüssigkeit kann durch getrennte Einspritzdüsen erfolgen. Dabei kann die Einspritzdüse für die zuzuführende Peroxoverbindung enthaltende Flüssigkeit eine gleiche Düse sein, wie sie für die Diesel-Kraftstoffeinspritzung üblicherweise verwendet wird. Alternativ kann zur Einspritzung dieser Flüssigkeit sowie des Dieselkraftstoffs eine einzige gemeinsame Einspritzdüse zur alternierenden Zufuhr des Dieselkraftstoffes und der eine Peroxoverbindung enthaltenden Flüssigkeit verwendet werden.

Die Erfindung wird anhand der Figuren 1 bis 4 näher dargestellt.

Fig. 1 stellt einen Längsschnitt durch eine Einspritzdüse dar, mit welcher zwei Flüssigkeiten alternierend eingespritzt werden können.

Fig. 2 zeigt die graphische Darstellung der gemessenen Rußverminderung in % an einem Dieselmotor durch H₂O₂-Einspritzung in Abhängigkeit vom Einspritzzeitpunkt unter Verwendung einer 1-Loch- und einer 2-Loch-Düse.

Fig. 3 zeigt die relative Rußverringerung in Abhängigkeit von der Konzentration der wäßrigen H₂O₂-Lösung unter Verwendung einer 1-Loch-Düse.

Fig. 4 zeigt die relative Rußverringerung in Abhängigkeit von der Einspritzmenge an wäßriger H₂O₂-Lösung (Gehalt: 60 Gew.-%).

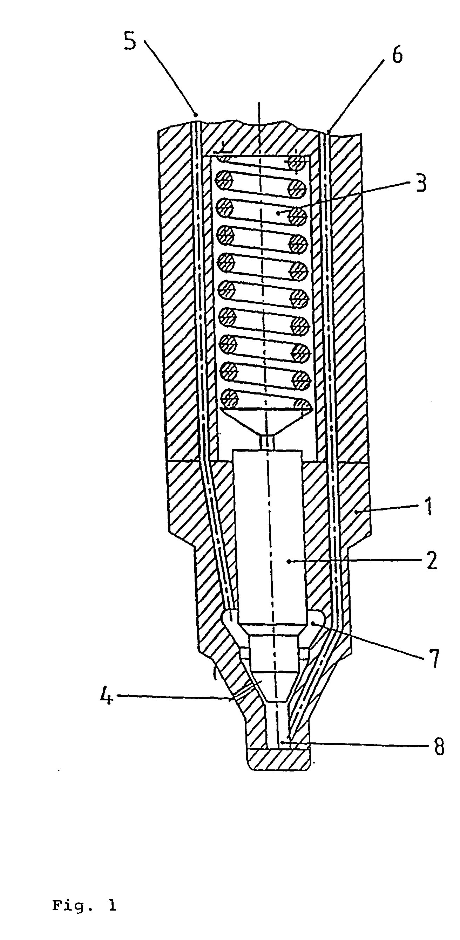

Der Aufbau und die Funktionsweise einer gemeinsamen Einspritzdüse zum alternierenden Ausspritzen von zwei Flüssigkeiten, vorzugsweise also des Dieselkraftstoffs und einer wäßrigen H₂O₂-Lösung, wird nachfolgend näher erläutert: In der Figur 1 ist eine Einspritzdüse in der Form einer abgewandelten sogenannten Sitzlochdüse in einem Längsschnitt dargestellt.

Die Einspritzdüse besteht aus einem Gehäuse 1 mit einem darin axial verschieblich gelagerten Verschlußteil 2 in der Form einer sogenannten Ventilnadel. Die als Verschlußteil 2 wirkende Ventilnadel ist in Schließstellung durch eine Feder 3 beaufschlagt. Die Spitze des Verschlußteils 2 ist konusförmig ausgebildet und verschließt in Schließstellung in dem Gehäuse 1 radial austretende Austrittsöffnungen 4.

In Fig. 1 ist nur eine Austrittsöffnung 4 gezeigt, vorzugsweise weist das Gehäuse zwei oder mehr Austrittsöffnungen aus, um eine optimale Verteilung der in den Brennraum einzuspritzenden Flüssigkeiten zu erzielen.

Durch die Austrittsöffnungen 4 können in das Gehäuse 1 unter Druck einzubringende Flüssigkeiten 5 oder 6, von denen die Flüssigkeit 5 eine erste und die Flüssigkeit 6 eine zweite von der ersten Flüssigkeit unterschiedliche Flüssigkeit sein sollen, alternierend ausgespritzt werden.

Grundsätzlich ist es bei dieser Vorrichtung möglich, daß beide Flüssigkeiten gleichzeitig ausgespritzt werden. Für die erfindungsgemäße Anwendung der Düse kommt allerdings im wesentlichen nur eine alternierende Ausspritzung der einen oder der anderen Flüssigkeit infrage.

Das Verschlußteil 2 kann durch den Druck der an ihm jeweils anstehenden Flüssigkeit geöffnet werden. Besitzt die zweite Flüssigkeit 6 einen Druck, unter dem bei einem nicht vorhandenen oder geringen Druck der ersten Flüssigkeit 5 das Verschlußteil 2 unter der Kraft der Feder 3 die Austrittsöffnungen 4 verschließt, kann durch eine Erhöhung des Drucks der ersten Flüssigkeit 5 das Verschlußteil 2 in eine die Austrittsöffnungen 4 freigebende Stellung verschoben werden. Hierzu sind die an einen ersten Flüssigkeitsraum 7 in Verschieberichtung des Verschlußteils 2 angrenzenden Flächen des Verschiebeteils 2 so ausgestaltet, daß bei einem mit Bezug auf die Kraft der Feder ausreichend hohen Druck innerhalb der ersten Flüssigkeit eine Veschiebung des Verschlußteiles 2 in Offenstellung der Austrittsöffnungen 4 erfolgt. Ist bei der Zuleitung der zweiten Flüssigkeit 6 ein Rückfluß nicht möglich, tritt bei einer durch den Druck der ersten Flüssigkeit 5 geöffneten Düse ausschließlich erste Flüssigkeit 5 aus den Austrittsöffnungen 4 aus.

Wird der Druck der ersten Flüssigkeit 5 soweit abgesenkt, daß mit Bezug auf den Druck der zweiten Flüssigkeit 6 und die von der Feder 3 ausgehende Schließkraft ein Verschließen der Austrittsöffnungen 4 durch das Verschlußteil 2 erfolgt, kann das Verschlußteil 2 durch Druckerhöhung innerhalb der zweiten Flüssigkeit 6 ebenfalls geöffnet werden. Ist ein Rückfluß der ersten Flüssigkeit 5 nicht möglich, so wird bei durch den Druck der sich in einem zweiten Flüssigkeitsraum 8 befindlichen zweiten Flüssigkeit 6 geöffnetem Verschlußteil 2 ausschließlich zweite Flüssigkeit 6 aus den Austrittsöffnungen 4 austreten.

Durch alternierende Druckbeaufschlagung der Flüssigkeiten 5 und 6 kann somit jeweils abwechselnd erste und zweite Flüssigkeit 5, 6 aus ein und der gleichen Düse ausgespritzt werden.

Bei Verwendung einer solchen Düse zur Durchführung des erfindungsgemäßen Verfahrens kann als erste Flüssigkeit Dieselkraftstoff und als zweite Flüssigkeit eine Wasserstoffperoxid enthaltende Flüssigkeit jeweils alternierend ausgespritzt werden.

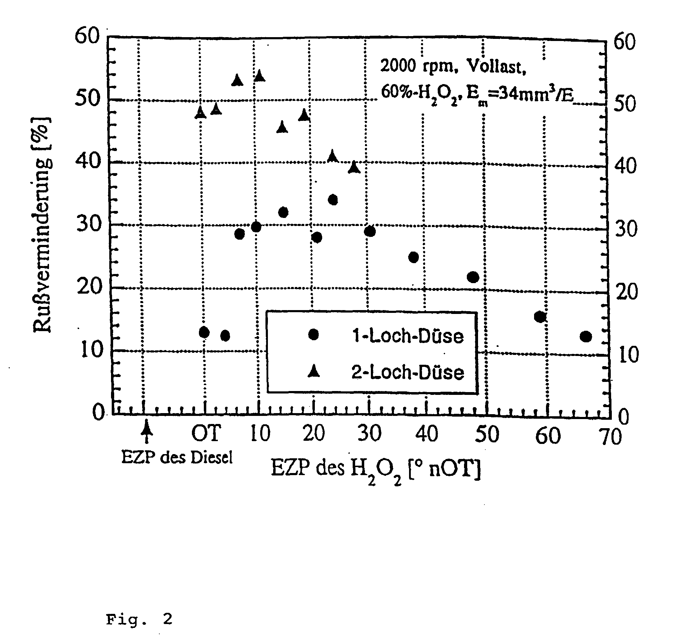

Aus den Figuren 2 bis 4, Details sind den Beispielen zu entnehmen, folgt, daß die größten Einflüsse auf die Rußverminderung die richtige Wahl des Einspritzzeitpunktes (EZP) und die gute Verteilung des wäßrigen Wasserstoffperoxids im Brennraum haben. Die H₂O₂-Konzentration und die Einspritzmenge haben oberhalb einer Mindestkonzentration und Mindesteinspritzmenge eine geringere Bedeutung für die Rußoxidation als der EZP. Ein bevorzugter EZP bei 2000 rpm und Vollast liegt zwischen 5° und 30° Kurbelwinkel nach dem oberen Totpunkt, wenn die Dieselkraftstoff-Einspritzung bei etwa 10° Kurbelwinkel vor dem oberen Totpunkt beginnt. Eine besonders bevorzugte H₂O₂-Lösung weist einen H₂O₂-Gehalt zwischen 30 und 60 Gew.-% auf; in der Praxis wird die H₂O₂-Konzentration meistens 40 bis 50 Gew.-% betragen. Die optimale Einspritzung an H₂O₂-Lösung liegt bei Vollast oberhalb 50 % bis 100 % der eingespritzten Dieselmenge.

Eine weiter verbesserte Mischung nach dem Einspritzen der verdampfenden H₂O₂-Lösung mit dem Restgas läßt sich durch Verwendung von Düsen mit mehr als 2 Löchern, etwa 4-Loch- oder 5-Loch-Düsen, mit optimierten Bohrungsdurchmessern und Einspritzwinkeln erwarten. Auch durch Erhöhung des Einspritzdrucks kann eine bessere Verteilung im Brennraum erreicht werden. Durch Verwendung einer kombinierten Einspritzdüse gemäß Fig. 1, in der Diesel und eine wäßrige Wasserstoffperoxidlösung hintereinander eingespritzt werden, kann erreicht werden, daß die zur Rußoxidation benötigten OH-Radikale dort entstehen, wo sie zur Vervollständigung der Verbrennung und damit Verringerung des Rußgehalts im Abgas benötigt werden. Damit kann die zur maximalen Rußreduzierung benötigte Menge an H₂O₂ weiter verringert werden.

### Beispiele

Die in den Figuren 2 bis 4 dargestellten Versuchsergebnisse wurden in einem luftgekühlten direkt einspritzenden Einzylinder-4-Takt-Dieselmotor ermittelt: max. Leistung 9,9 kW; max. Drehmoment 37 Nm bei 2000 rpm; Hubraum 625 cm³; Hub 110 mm; Bohrung 85 mm; Ventile 2; Verdichtung 17 : 1. Für die Untersuchungen wurde der Zylinderkopf durch Aufnahme einer zweiten Einspritzdüse und die Befestigung des Düsenhalters modifiziert. Durch den Einsatz einer zweiten Einspritzpumpe konnten der Zeitpunkt und die Menge der H₂O₂-Einspritzung unabhängig vom Lastpunkt des Motors und der Dieseleinspritzung variiert werden. Die Diesel-Einspritzpumpe erreichte einen maximalen Einspritzdruck von 400 bar; eingesetzt wurde eine symmetrisch einspritzende Vierloch-Düse. Die Einspritzpumpe für die H₂O₂-Lösung erreichte einen Einspritzdruck von maximal 450 bar; verwendet wurden Einspritzdüsen mit einem und zwei Löchern.

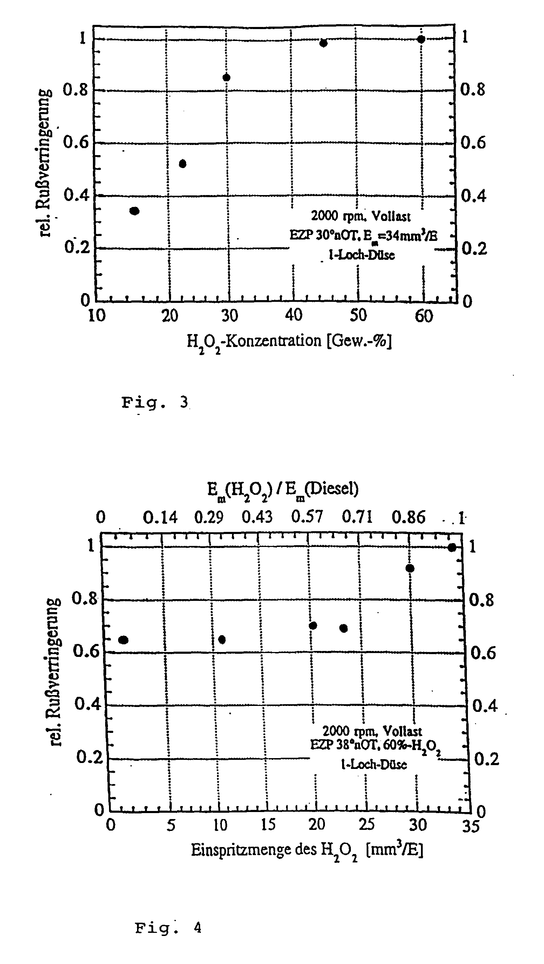

Untersucht wurde der H₂O₂-Einspritzzeitpunkt (EZP), wobei als Maß das Winkelmaß der Kurbelwelle nach dem oberen Totpunkt (OT) herangezogen wurde; die Einspritzung des Dieselkraftstoffs begann bei etwa 10° Kurbelwinkel vor dem oberen Totpunkt. Der EZP lag im Bereich von OT bis 66° nach OT (siehe Fig. 2). Variiert wurden auch die H₂O₂-Konzentrationen im Bereich von 15 Gew.-% bis 60 Gew.-% (siehe Fig. 3) sowie die Einspritzmenge Eₘ pro Einspritzung, welche 2,6 bis 34 mm³/Einspritzung betrug (siehe Fig. 4). Die Einspritzmenge Eₘ entsprach bei Nenndrehzahl und Vollast 5 bis 100 % der Diesel-Einspritzmenge.

In Fig. 2 sind die Meßergebnisse zur Rußverminderung über einer Variation des Einspritzzeitpunktes (EZP) des H₂O₂ für zwei Düsenvarianten aufgetragen. Der Motor wurde bei 2000 rpm und Vollast betrieben. Die H₂O₂-Konzentration betrug 60 %, die Einspritzmenge Eₘ = 34 mm³/Einspritzung; die Menge an wäßriger H₂O₂-Lösung entsprach etwa 100 % der eingespritzten Dieselmenge beim vermessenen Betriebspunkt. Der EZP des Diesel lag bei der gewählten Drehzahl bei 10 ° vor dem oberen Totpunkt (OT).

Aus Fig. 2 folgt, daß sowohl bei der 1-Loch-Düse als auch bei der 2-Loch-Düse mit Erhöhung des EZP ab dem oberen OT zunächst eine deutliche Steigerung der Rußverminderung bis auf ein Optimum verbunden ist. Danach fällt die Kurve der Rußverminderung wieder langsam ab. Es ist zu erkennen, daß bei sonst gleichen Bedingungen durch die 2-Loch-Düse wesentlich mehr Ruß oxidiert werden kann als durch die 1-Loch-Düse. Bei einem Einspritzzeitpunkt von 11° nach OT wird bei der 2-Loch-Düse eine Rußverringerung um 54 % erreicht. Dagegen wird durch Einsatz der 1-Loch-Düse nur etwa 34 % Rußverringerung erzielt. Der Grund hierfür liegt vermutlich in einer besseren Verteilung des H₂O₂ im Brennraum. Da für die Rußoxidation nur ein kleines Zeitfenster besteht, kommt der optimalen Mischung des H₂O₂ mit dem Restgas eine wesentliche Bedeutung zu. Das günstige Zeitfenster, in dem viel Ruß oxidiert wird, liegt bei der 1-Loch-Düse zwischen 7° Kurbelwinkel (KW) und etwa 30° KW nach OT. Bei der 2-Loch-Düse ist der Bereich zu etwas früheren Zeiten verschoben. Eine weitere Rußverminderung ist durch den Einsatz von Düsen mit mehr als zwei Löchern, etwa einer Vierloch-Düse, zu erwarten.

In Fig. 3 sind die Ergebnisse einer Variation der H₂O₂-Konzentration aufgetragen. Die Achse der Rußverringerung ist dabei mit der hierbei gemessenen maximalen Rußverringerung normiert worden. Die wesentliche Aussage der Figur ist, daß sich ab einer gewissen Konzentration des H₂O₂ - hier etwa 45 Gew.-% - durch weitere Konzentrationserhöhung keine weitere Reduzierung der Rußmenge im Abgas mehr erzielen läßt. Bei anderen gewählten Einspritzzeitepunkten und Drehzahlen zeigten sich vergleichbare Ergebnisse.

Die Fig. 4 gibt die Ergebnisse der Messungen zur Variation der eingespritzten Menge an H₂O₂-Lösung mit einem Gehalt von 60 Gew.-% H₂O₂ wieder. Auch hier wurde die Rußverringerung mit dem Maximalwert normiert. Auf der unteren Achse zur Einspritzmenge ist der Absolutwert in mm³/Einspritzung aufgetragen und auf der oberen Achse ist dieser Wert auf die eingespritzte Dieselmenge bezogen. Es zeigte sich eine geringe Abhängigkeit der Rußverminderung von der Einspritzmenge. Dies bedeutet, daß sich auch bei geringen Mengen an H₂O₂ ein deutlicher Effekt in der Rußreduzierung zeigt. Da anzunehmen ist, daß bei erhöhter Einspritzmenge und damit höheren Einspritzzeiten eine bessere Verteilung im Brennraum vorliegt, läßt sich hiermit auch die bessere Rußoxidation bei größerer Einspritzmenge erklären.

Das erfindungsgemäße Verfahren läßt sich sowohl bei stationären als auch nicht-stationären Dieselmotoren verwenden.

## Patentansprüche

1. Verfahren zur Verringerung des Rußgehalts im Abgas eines Dieselmotors, in dessen Brennraum Dieselkraftstoff getaktet eingespritzt und verbrannt und jeweils nach Beginn der Einspritzung und Verbrennung des Kraftstoffs eine Wasserstoffperoxid enthaltende wäßrige Flüssigkeit dem Brennraum zugeführt wird,
dadurch gekennzeichnet,
daß man eine Wasserstoffperoxid enthaltende Flüssigkeit mit einem H₂O₂-Gehalt zwischen 30 und 60 Gew.-% in einer Menge von 50 bis 100 % der Menge des Dieselkraftstoffs mittels Düsen mit mehr als einem Loch, insbesondere 2 bis 5 Löchern, einspritzt.

2. Verfahren nach Anspruch 1,
dadurch gekennzeichnet,
daß die Peroxoverbindung enthaltende Flüssigkeit im Bereich von 5° bis 40° Kurbelwinkel nach Beginn der Einspritzung des Dieselkraftstoffs dem Brennraum zugeführt wird.

3. Verfahren nach Anspruch 1 oder 2,
dadurch gekennzeichnet,
daß die Dieselkraftstoff-Einspritzung 10° ± 5° Kurbelwinkel vor dem oberen Totpunkt beginnt und die Peroxoverbindung enthaltende Flüssigkeit im Bereich von 5° bis 30° Kurbelwinkel nach dem oberen Totpunkt dem Brennraum zugeführt wird.

4. Verfahren nach einem der Ansprüche 1 bis 3,
dadurch gekennzeichnet,
daß zum Einspritzen von Dieselkraftstoff und der eine Peroxoverbindung enthaltenden Flüssigkeit eine Düse zum alternierenden Ausspritzen beider Flüssigkeiten verwendet wird.

## Claims

1. Process for reducing the soot content in the exhaust gas from a diesel engine, into the combustion chamber of which diesel fuel is injected and combusted in a timed manner, and, in each case after the beginning of injection and combustion of the fuel, an aqueous liquid containing hydrogen peroxide is supplied to the combustion chamber,
characterised in that
a liquid containing hydrogen peroxide having an H₂O₂ content of between 30 and 60 wt.% is injected in a quantity of 50 to 100% of the quantity of the diesel fuel by means of nozzles having more than one hole, in particular 2 to 5 holes.

2. Process according to claim 1,
characterised in that
the liquid containing peroxo compound is supplied to the combustion chamber at a crank angle in the range from 5° to 40° after the beginning of injection of the diesel fuel.

3. Process according to claim 1 or 2,
characterised in that
injection of the diesel fuel begins at a crank angle of 10° ± 5° before top dead centre and the liquid containing peroxo compound is supplied to the combustion chamber at a crank angle in the range from 5° to 30° after top dead centre.

4. Process according to claims 1 to 3,
characterised in that
injection of diesel fuel and the liquid containing a peroxo compound is achieved by using one nozzle for alternately spraying both liquids.

## Revendications

1. Procédé de réduction de la teneur en suies dans les gaz d'échappement d'un moteur diesel, dans la combustion duquel on injecte et on brûle en plusieurs temps un combustible diesel et à chaque fois après le début de l'injection et de la combustion du combustible on ajoute dans la chambre à combustion un liquide aqueux contenant du peroxyde d'hydrogène,
caractérisé en ce qu'
on injecte un liquide contenant du peroxyde d'hydrogène ayant une teneur en H₂O₂ comprise entre 30 et 60 % en poids en une quantité de 50 à 100 % de la quantité de combustible diesel au moyen de buses comportant plus d'un trou, en particulier de 2 à 5 trous.

2. Procédé selon la revendication 1,
caractérisé en ce qu'
on ajoute le liquide contenant le composé peroxo dans un intervalle de 5 à 40° d'angle de vilebrequin après le début de l'injection du combustible diesel dans la chambre de combustion.

3. Procédé selon la revendication 1 ou 2,
caractérisé en ce que
l'injection de combustible diesel commence à 10° ± 5° d'angle de curseur avant le point mort haut et en ce que le liquide contenant le composé peroxo est ajouté à la chambre de combustion dans un intervalle de 5° à 30° d'angle de vilebrequin après le point mort haut.

4. Procédé selon l'une des revendications 1 à 3,
caractérisé en ce qu'
on utilise pour l'injection du combustible diesel et du liquide contenant un composé peroxo une buse pour une injection alternée des deux liquides.
